(19) Europäisches Patentamt

European Patent Office

Office européen des brevets

(11) **EP 0 918 012 A2**

(12) **EUROPÄISCHE PATENTANMELDUNG**

(43) Veröffentlichungstag:
26.05.1999 Patentblatt 1999/21

(51) Int. Cl.⁶: **B62D 5/04**, H02P 21/00

(21) Anmeldenummer: 98121403.4

(22) Anmeldetag: 11.11.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 20.11.1997 DE 19751566

(71) Anmelder:
SIEMENS AKTIENGESELLSCHAFT
80333 München (DE)

(72) Erfinder:
• Schäfer, Heinz Dr.
97230 Estenfeld (DE)
• Wähner, Ludwig Dipl.-Ing.
97234 Reichenberg (DE)
• Johanning, Hans-Peter Dipl.-Ing.
97299 Zell am Main (DE)

(54) **Durch einen Elektromotor servounterstützte Positioniervorrichtung, insbesondere Servolenkung für ein Kraftfahrzeug**

(57) Der Magnetisierungsstrom ($i_\mu'$) für die als servounterstützender Elektromotor vorgesehene Asynchronmaschine (AS) wird energieoptimal nach dem Prinzip der rotorflußorientierten Steuerung aus dem für das jeweilige Antriebsmoment notwendigen Wirkstrom ($i_{sq}^*$) abgeleitet; zur Vereinfachung der Regelungsstruktur wird von der Annahme einer gegen Null gehenden Statorfrequenz der pulsweitenmodulierten Spannung der Asynchronmaschine ausgegangen.

FIG 2

**Beschreibung**

Die Erfindung bezieht sich auf eine durch einen Elektromotor servounterstützte Positioniervorrichtung, insbesondere Servolenkung für ein Kraftfahrzeug, gemäß Patentanspruch 1.

Servolenkungen für ein Kraftfahrzeug benutzen vorwiegend eine hydraulische Drehmomentenunterstützung; soweit überhaupt Elektromotoren für derartige Servounterstützungen herangezogen worden sind, wurden permanenterregte Kommutatormotore bzw. Synchronmotore oder Reluktanzmotore vorgesehen, die entweder mit Sicherheitsproblem, insbesondere im Fall eines Kurzschlusses, bzw. mit Bedien- und Komfortproblemen, insbesondere aufgrund ihrer Drehmomentenwelligkeit, behaftet sind.

Durch die EP 0 778 660 A2 ist eine Servolenkung für ein Kraftfahrzeug mit einem feldorientierten Asynchronmotor bekannt; dessen Flußsollwert wird über einen Tabellenspeicher in Abhängigkeit von Fahrgeschwindigkeit und Drehmoment eingestellt.

Durch die DE 37 44 905 C2 ist ein feldorientiert gesteuerter Asynchronmotor-Antrieb bekannt, bei dem zur optimalen Nutzung des Motors in dessen Grunddrehzahlbereich die feldbildende und die drehmomentbildende Stromkomponente gleichgroß eingestellt werden; die drehmomentbildende Komponente des Stromvektors wird am Ausgang eines Dividierers einer dem Asynchronmotors zugeordneten Steuereinheit abgegeben, dem als Dividend ein Sollwert des Drehmomentes zugeführt ist und der als Divisor ein Flußsignal empfängt.

Gemäß Aufgabe vorliegender Erfindung soll eine einfache, jedoch allen Betriebsanforderungen voll genügende und dabei den elektrischen Leistungsbedarf nur gering belastende Servounterstützung geschaffen werden.

Die Lösung dieser Aufgabe gelingt durch eine mittels einer Asynchronmaschine servounterstützte Positioniervorrichtung gemäß Patentanspruch 1; vorteilhafte Ausgestaltungen der Erfindung sind jeweils Gegenstand der Unteransprüche.

Ausgehend von der Erkenntnis, daß bei einer Servolenkung für ein Kraftfahrzeug im wesentlichen nur kleine und kurzzeitige Lenkausschläge betriebsmäßig vorliegen und somit der üblicherweise über eine Umrichtersteuerung gepulste Elektromotor in Form einer Asynchronmaschine nur im unteren Drehzahlbereich und bei geringerem Momentenbedarf eingesetzt wird, zeichnet sich die erfindungsgemäße Positioniervorrichtung durch einen erhöhten Wirkungsgrad und damit eine geringere Erwärmung und Belastung des elektrischen Bordnetzes bei hoher Lebensdauer und Betriebssicherheit sowie durch geringe magnetische Geräusche aufgrund einer niedrigen Drehmomentenwelligkeit bei insbesondere geringem Steuerungs- bzw. Regelaufwand aus, da bei Auslegung der Regelungsstruktur zur Adaption des verlustoptimalen Magnetisierungsstroms in Abhängigkeit vom jeweils notwendigen Wirkstrom von einer gegen Null gehenden Statorfrequenz der pulsweitenmodulierten Spannung der Asynchronmaschine ausgegangen wird.

Die feldorientierte bzw. rotorflußorientierte Steuerung einer Asynchronmaschine ist an sich, z.B. durch das Buch "Steuerverfahren für Drehstrommaschinen" von H. Späth, Springer-Verlag, 1983, bekannt.

Die feldorientierte Steuerung der Asynchronmaschine geht von der mathematischen Beschreibung des dynamischen Maschinenverhaltens mit Raumzeigergrößen aus. Feldorientierung bedeutet, daß man die frei wählbare Bezugsachse dieses mathematischen Maschinenmodells bezüglich ihrer Winkellage fest mit dem Rotorflußraumzeiger, dem Statorflußraumzeiger oder dem Luftspaltflußraumzeiger verbindet. Die mathematisch einfachste Maschinenstruktur und damit auch die einfachste Struktur einer Steuerung ergeben sich dann, wenn der Rotorflußraumzeiger als Orientierungsgröße gewählt wird. Die Struktur der Maschine gleicht dann bei Vorgabe des Ständerstromraumzeigers der einer fremderregten kompensierten Gleichstrommaschine. Die feldorientierte Steuerung der Asynchronmaschine wird dadurch erreicht, daß man die im feldorientierten Koordinatensystem dargestellten Komponenten des Statorstromzeigers der Maschine als Steuer- bzw. Regelgrößen vorgibt. Mittels einer einfachen Entkopplung werden der Betrag des Flußraumzeigers und das innere Drehmoment unabhängig voneinander steuerbar.

Die Erfindung sowie weitere vorteilhafte Ausgestaltungen der Erfindung werden im folgenden anhand schematischer Darstellungen in der Zeichnung näher erläutert; darin zeigen:

FIG 1    die konstruktive Zuordnung einer Servounterstützung eines Elektromotors zu einer Kraftfahrzeuglenkung;

FIG 2    das Blockschaltbild einer verlustoptimalen Einstellung des Rotorflußes für eine rotorflußorientiert gesteuerte Asynchronmaschine.

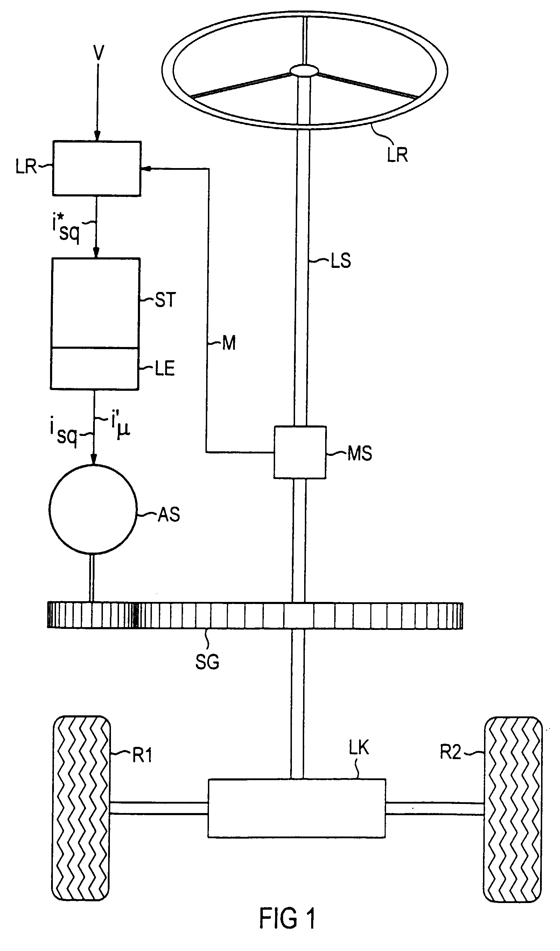

FIG 1 zeigt zwei Vorderräder R1;R2 eines Kraftfahrzeuges, die mittels eines Lenkrades LR über eine Lenksäule LS und ein Lenkgetriebe LK lenkbar sind. Zur Servounterstützung ist die Lenksäule LS über ein Getriebe G von einer Asynchronmaschine AS, insbesondere einer Asynchronmaschine mit Käfigläufer, antreibbar, die über eine Leistungselektronik LE von einer rotorflußorientierten Steuervorrichtung ST steuer- bzw. regelbar ist. Die Steuervorrichtung ST ist eingangsseitig mit einer Lenkungsregelung LR verbunden, der neben der jeweiligen Fahrgeschwindigkeit V insbesondere von einem im Zuge der Lenksäule LS angeordneten Drehmomentensensor MS das jeweilig abgeforderte Drehmoment M vorgegeben wird, aus dem ein entsprechender Sollwert-Wirkstrom $i_{sq}^*$ für die Steuervorrichtung ST abgeleitet wird. Aufgrund des jeweils ermittelten Sollwert-Wirkstromes $i_{sq}^*$ wird dann der für das notwendige innere

Drehmoment $M_{i1}$ der Asynchronmaschine AS erforderliche Wirkstrom $i_{sq}$ und abhängig davon der im Sinne einer verlustoptimalen Einstellung des Rotorflußes notwendige Magnetisierungsstrom $i_\mu$' - wie im folgenden näher erläutert - ermittelt.

Dieses Steuer- bzw. Regelverfahren erleichtert die getrennte Vorgabe von Wirkstrom einerseits und Magnetisierungsstrom andererseits, wobei der Wirkstrom für die Drehmomentenbildung und der Magnetisierungsstrom für die Flußbildung, d.h. die Erregung herangezogen wird; dabei ist Magnetisierungsstrom nicht konstant sondern im Sinne eines minimalen Verlustes, d.h. einer geringsten Belastung der zur Verfügung stehenden Stromquelle, optimiert und an den jeweils notwendigen Wirkstrom adaptiert.

Die im folgenden erläuterten Maßnahmen zur verlustoptimalen Einstellung des Rotorflußes basieren insbesondere auf dem eingangs genannten Schrifttum, insbesondere Pkt. 1.11.

Das im stationären Betrieb mit Rücksicht auf die zulässige Erwärmung der Asynchronmaschine AS innere Drehmoment ergibt sich zu

$$M_{i1} = K1 \cdot i_{sp} \cdot i_{sq}$$

mit $i_{sq}$ = Wirkstrom; $i_{sp}$ = Erregerstrom mit der Verknüpfung des auf den Stator bezogenen Magnetisierungs-(Blind)-Stroms $i'_\mu$ mit $i_{sp}$ über ein VZ1-Glied, d.h. ein durch die Rotorzeitkonstante bedingtes Verzögerungsglied 1. Ordnung.

Der Optimalwert des Magnetisierungsstromes $i'_{\mu\,opt}$ ergibt sich aus der ersten Ableitung der Verlustleistung $P_V = P_{VCu} + F_{VFe}$ zu

$$i'_{\mu\,opt} = \sqrt[4]{\frac{R_R + R_R{}'}{R_S + R_{Fe} \cdot h\frac{fs}{f_{sw}} + R_{Fe}(1-h)(\frac{fs}{f_{SN}})^2}} \cdot \sqrt{\frac{M_{i1}}{K_1}}$$

Zweckmäßigerweise wird im Sinne einer vorteilhaften, die Bedingungen einer Servolenkung in einem Kraftfahrzeug ausnutzenden, Vereinfachung bei der Auslegung der Regelungsstruktur die Statorfrequenz $f_s$ = Null angenommen. Daraus folgt dann

$$i'_{\mu\,opt} = K_3 \cdot i_{sq}.$$

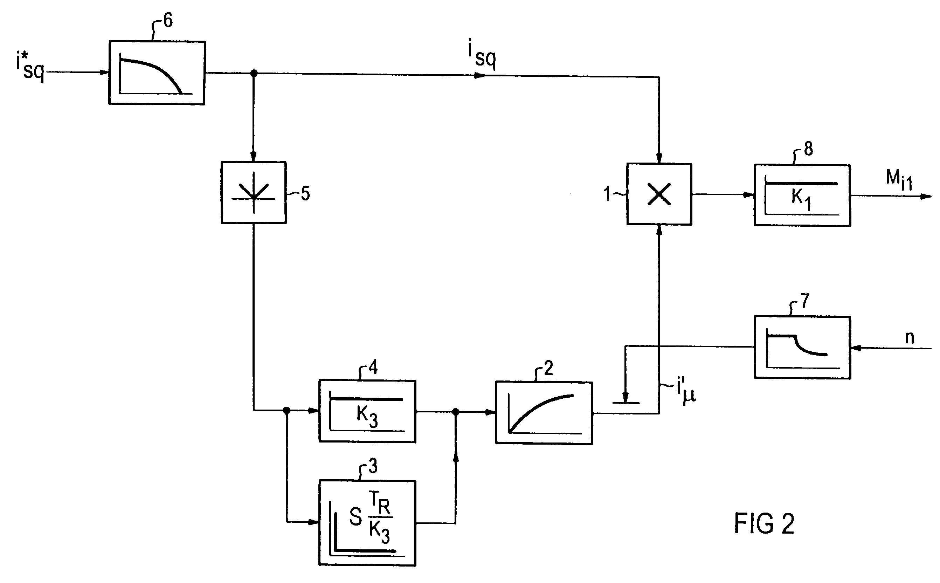

Zur Regelung bzw. Steuerung des inneren Drehmomentes $M_{i1}$ wird gemäß FIG 2 in einem Multiplizierer 1 das Produkt aus dem notwendigen Wirkstrom $i_{sq}$ und dem verlustoptimalen Magnetisierungsstrom $i'_{\mu\,opt}$ mit der Konstante $K_1$ gemäß der zuvor angegebenen Formel gebildet.

Der für das jeweilige innere Drehmoment $M_{i1}$ notwendige Wirkstrom $i_{sq}$ wird aus dem über den Drehmomentsensor MS bestimmten Sollwert-Wirkstrom $i_{sq}$* im wirkstromabhängigen Linearbildner 6 gewonnen. Durch den Linearbildner 6 soll eine lineare Abhängigkeit zwischen dem inneren Drehmoment $M_{i1}$ und dem momentenbildenden Wirkstrom $i_{sq}$ gewährleistet werden, was aufgrund der Produktbildung in dem Multiplizierer 1 an sich nicht gegeben ist; daher ist in dem Linearbildner 6 eine entsprechende Gegenoperation im Sinne einer vorzeichenunabhängigen Wurzeloperation vorgesehen.

Der Ausgangswert des Linearbildners 6 dient gleichzeitig zur Bildung des verlustoptimalen Magnetisierungsstromes $i'_{\mu\,opt}$, wobei der Ausgangswert des Linearbildners 6 über eine Vorsteuerung 3 im Sinne einer Kompensation der durch die Rotorzeitkonstante $T_R$ verzögerten, im Verzögerungsglied 2 berücksichtigten Bildung des Magnetisierungsstromes $i'_\mu$ geleitet und additiv geführt ist mit einem Proportionalglied 4 im Sinne einer Gesamtbearbeitung:

$$K_3 \left(1 + S\frac{T_R}{K_3}\right)$$

Zweckmäßigerweise ist zusätzlich im Adapations-Zweig für den Magnetisierungsstrom eingangsseitig ein Betragsbildner 5 vorgesehen, der die Abhängigkeit des Magnetisierungsstroms vom Vorzeichen des gemessenen Eingangswertes des Magnetisierungsstromes aufhebt; im Gegensatz dazu verbleibt im Wirkstrom-Zweig der Regelungsstruktur der Wirkstrom $i_{sq}$ vorzeichenbehaftet im Sinne einer Drehmomentbildung sowohl für Rechtslauf als auch für Linkslauf der Asynchronmaschine AS.

Nach einer weiteren Ausgestaltung der Erfindung wird der Magnetisierungsrom in vorteilhafter Weise in Abhängigkeit von einem Begrenzer 7 gestellt, derart daß der Magnetisierungsstrom bei höherer Drehzahl, insbesondere zur Verhinderung einer thermischen Überlastung bzw. im Sinne eines Feldschwächbetriebes, begrenzbar ist.

**Patentansprüche**

1. Durch einen Elektromotor servounterstützte Positioniervorrichtung, insbesondere Servolenkung für ein Kraftfahrzeug,

   - mit einer rotorflußorientiert geregelten Asynchronmaschine (AS) als Servo-Elektromotor;
   - mit einer Regelung des inneren Momentes ($M_{i1}$) der Asynchronmaschine (AS) nach dem Prinzip der verlustoptimalen Steuerung bzw. Regelung des Rotorflusses durch Einstellung des Magnetisierungsstromes ($i'_\mu$) in Abhängigkeit von einem entsprechend dem jeweils geforderten Antriebs-Drehmoment ermittelten Sollwert-Wirkstrom ($i_{sq}^*$);
   - mit einer Definition des verlustoptimalen Magnetisierungsstroms ($i'_{\mu\,opt}$) unter Vernachlässigung der Statorfrequenz des Wirkstromes($i_{sq}$) bzw. Magnetisierungsstroms ($i'_\mu$) entsprechend der Formel

$$i'_{\mu\ opt} = \sqrt[4]{\frac{R_s + R_R{}'}{R_R}} \cdot \sqrt{\frac{M_{i1}}{K_l}} = K_2 \sqrt{\frac{M_{i1}}{K_l}} = K_2{}^2 \cdot i_{sq} = K_3 \cdot i_{sq}$$

   $R_s$ = Statorwiderstand
   $R_R{}'$ = auf Stator umgerechneter Rotorwiderstand
   $M_{i1}$ = inneres Drehmoment der AS = $K_1 \cdot i_{sq} \cdot i'_\mu$

2. Positioniervorrichtung nach Anspruch 1

   - mit einer Bildung der Regelgröße des jeweiligen inneren Momentes ($M_{i1}$) der Asynchronmaschine (AS) als Produkt aus dem momentenbestimmenden Wirkstrom ($i_{sq}$) einerseits und dem daran im Sinne eines minimalen Verlustes angepaßten Magnetisierungsstrom ($i'_\mu$) andererseits.

3. Positioniervorrichtung nach Anspruch 1 und/oder 2

   - mit einem wirkstromabhängigen Linearbildner (6) im Sinne einer linearen Abhängigkeit zwischen dem geregelten inneren Moment ($M_{i1}$) der Asynchronmaschine (AS) und dem jeweils entsprechend dem geforderten Drehmoment ermittelten Sollwert-Wirkstrom ($i_{sq}^*$) vor der Bildung der Regelgröße für den Wirkstrom ($i_{sq}$) und dem daraus abgeleiteten Magnetisierungsstrom ($i'_\mu$).

4. Positioniervorrichtung nach zumindest einem der vorhergehenden Ansprüche 1-3

   - mit einer Ableitung des Magnetisierungsstromes ($i'_\mu$) aus dem jeweils entsprechend dem geforderten Drehmoment ermittelten Sollwert-Wirkstrom ($i_{sq}^*$) über einen Betragsbildner (5).

5. Positioniervorrichtung nach zumindest einem der vorhergehenden Ansprüche 1-4

   - mit einer Ableitung des Magnetisierungsstromes ($i'_\mu$) aus dem jeweils entsprechend dem geforderten Drehmoment erforderlichen Sollwert-Wirkstrom ($i_{sq}^*$) über eine Vorsteuerung (3) zur Kompensation des aufgrund der Rotorzeitkonstanten ($T_R$) verzögerten Bildung des Magnetisierungsstroms.

6. Positioniervorrichtung nach zumindest einem der vorhergehenden Ansprüche 1-5

   - mit einem Begrenzer (7) zur Begrenzung des Magnetisierungsstromes ($i'_\mu$) in Abhängigkeit von der Drehzahl (n) in der Asynchronmaschine (AS).

EP 0 918 012 A2

FIG 1

5

FIG 2

EP 0 918 012 A2